# FASCICULE DE BREVET EUROPEEN

(11) **EP 0 524 888 B1**
(45) Date de publication et mention de la délivrance du brevet: **13.12.1995**
(21) Numéro de dépôt: 92402142.1
(22) Date de dépôt: 24.07.1992
(51) Int. Cl.: B64G 1/40

(54) **Voilure solaire**
Sonnensegel
Solar sail

(30) Priorité: 26.07.1991 FR 9109504
(43) Date de publication de la demande: 27.01.1993
(73) Titulaire: OFFICE NATIONAL D'ETUDES ET DE RECHERCHES AEROSPATIALES (ONERA), 92320 Chatillon sous Bagneux (FR); CENTRE NATIONAL D'ETUDES SPATIALES, 75001 Paris (FR)
(72) Inventeur: Prado, Jean Yves, F-31120 Portet (FR); Pignolet, Guy, F-97439 Sainte Rose (FR); Perret, Alain, F-31520 Ramonville (FR); Esterle, Alain, F-92330 Sceaux (FR); Mainguy, Anne Marie, F-94240 L'Hay Les Roses (FR); Sable, Claude, F-31450 Ayguesvives (FR); Flament, Didier, F-92320 Chatillon (FR)
(74) Mandataire: Ilgart, Jean-Christophe

(56) Documents cités:
- EP-A- 0 399 055
- WO-A-91/08949
- US-A- 3 558 219
- US-A- 3 690 080
- US-A- 3 698 958
- AIAA STUDENT JOURNAL Juillet 1981, CALIFORNIA (USA) pages 14 - 18 PRICE, H.W.'SOLAR SAIL ENGINEERING DEVELOPMENT MISSION'

## Description

L'invention se rapporte à une voilure solaire.

Les photons ont la propriété de repousser très légèrement les objets qu'ils atteignent. C'est Kepler qui découvrit cette propriété au dix-septième siècle en s'intéressant à la déviation des queues de comètes. La valeur des poussées produites fut calculée par Maxwell en 1873 et l'utilisation de ces poussées pour propulser les véhicules spatiaux fut imaginée d'abord par Tsiolkovski en 1921. L'essor de la propulsion solaire a cependant été freiné par la valeur, minime par rapport aux ordres de grandeur courants, des forces de poussée. La pression qu'on peut recueillir à une unité astronomique du Soleil, au rayon moyen de l'orbite terrestre, est de quatre grammes-force par hectare. Même s'il est possible de doubler cette valeur en utilisant une voile réfléchissante à la place d'une voile absorbante, les temps d'accélération jusqu'à une vitesse significative sont extrêmement longs et on a donc préféré jusqu'à présent les moyens de propulsion chimique classiques pour les applications courantes. Cependant un mode de propulsion qui évite de consumer du carburant peut présenter de l'intérêt, et les principaux constructeurs continuent de s'intéresser à cette technologie. C'est ce que démontre le succès que rencontrent les courses vers la Lune et vers Mars qui doivent se dérouler d'ici peu d'années. Plusieurs voiliers concurrents sont attendus pour ces compétitions dont l'enjeu immédiat est la démonstration technologique de ce mode de propulsion.

Des problèmes délicats doivent être surmontés pour assurer un déploiement correct d'une voile solaire. Les voiliers sont en effet emmagasinés dans la coiffe d'une fusée de lancement pour quitter la Terre et leurs voiles ne peuvent être déployées qu'après la séparation de la fusée, car leur envergure, qui peut atteindre jusqu'à une centaine de mètres, est beaucoup trop importante.

Il faut donc concevoir des mâts, entre lesquels la voile est tendue, qui peuvent être déployés à partir d'un état où ils sont repliés en même temps que la voile, sans que ce déploiement risque d'endommager la voile qui est une feuille extrêmement mince et fragile. Dans presque toutes les conceptions, la voile est d'une seule pièce et doit être pliée pour être emmagasinée, et on ne peut exclure des difficultés de dépliage provenant de collage locaux ou de mauvaises transmissions à la voile des forces produites lors du déploiement des mâts. Des déchirures ou des déploiements incomplets sont concevables et il est évidemment impossible d'y remédier dans l'espace. De plus, les plis sont généralement si nombreux que des patrons de pliage spéciaux et compliqués ont été proposes. Un exemple de voilure solaire pliée est illustré dans le brevet WO-A-91 08 949 ; un autre dans la publication de l'AIAA Student Journal, numéro d'été 1981, dans l'article "Solar Sail Engineering Development Mission" par H.W. Price.

Une autre conception consiste à ne pas utiliser de mât et à tendre la voile par la force centrifuge produite en la faisant tournoyer, mais de telles voiles ne peuvent que difficilement être manoeuvrées. On rencontre le même inconvénient parmi les voiles tendues sur un mât en cerceau.

Une voile solaire dont la physionomie ressemble à l'état déployé à celle de l'invention est proposée par la Société italienne Aeritalia. La voile est carrée quand elle est déployée et tendue par quatre mâts concourants, situés aux diagonales du carré et attachés au voilier par des emplantures à l'extrémité où ils concourent. La voile est formée à partir d'une bande de Mylar (marque déposée) qui est ensuite coupée en bandes de longueur plus petite qu'on soude entre elles par leurs bords latéraux. Le carré obtenu est ensuite plié à l'endroit des soudures pour obtenir finalement deux empilements parallèles et semblables de plis séparés par une partie de faible largeur qui n'est pas pliée et qui est fixée au voilier par son milieu.

Les mâts sont en réalité des tubes gonflables raccordés au voilier par une extrémité ouvertes de gonflage et qui sont posés sur les faces supérieures des empilements de plis. Comme les mâts sont diagonaux et donc plus longs que les plis de la voile, leur extrémité libre en dépasse, doit être pliée plusieurs fois, et les bouts sont glissés sous les empilements des plis pour être soudés aux emplacements qui formeront les coins de la voile. Les empilements de plis sont ensuite enroulés et aplatis.

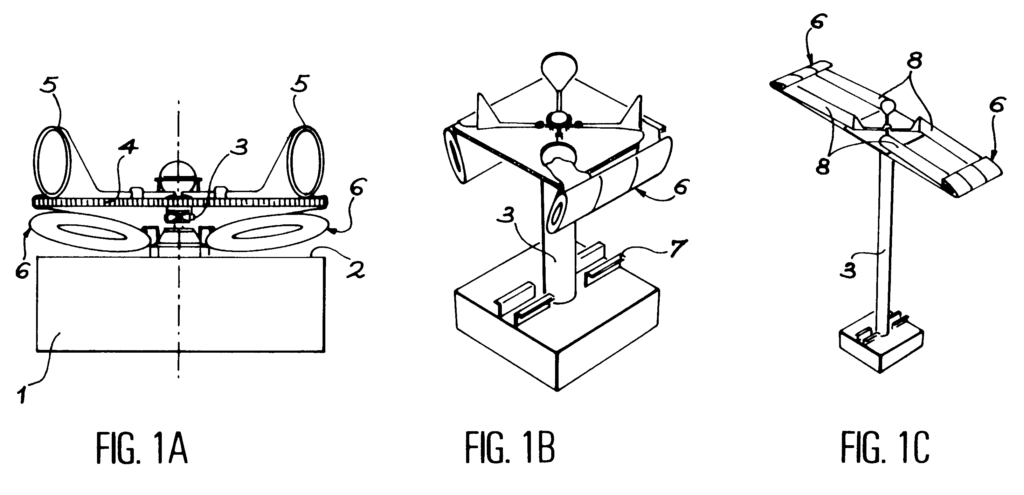

Le déploiement de cette voile est illustré sur les figures 1A à 1F. Le voilier 1 spatial comporte (figure 1A) une plate-forme 2 de laquelle dépasse une tige de vérin 3 portant une plaque en nid d'abeilles 4. La tige de vérin 3 dissimule également les tubes de gonflage qui aboutissent à quatre embouchures 5 auxquelles les mâts sont emmanchés. Les deux rouleaux 6 constituant la voile repliée sont protégés entre la plate-forme 2 et la plaque en nid d'abeilles 4.

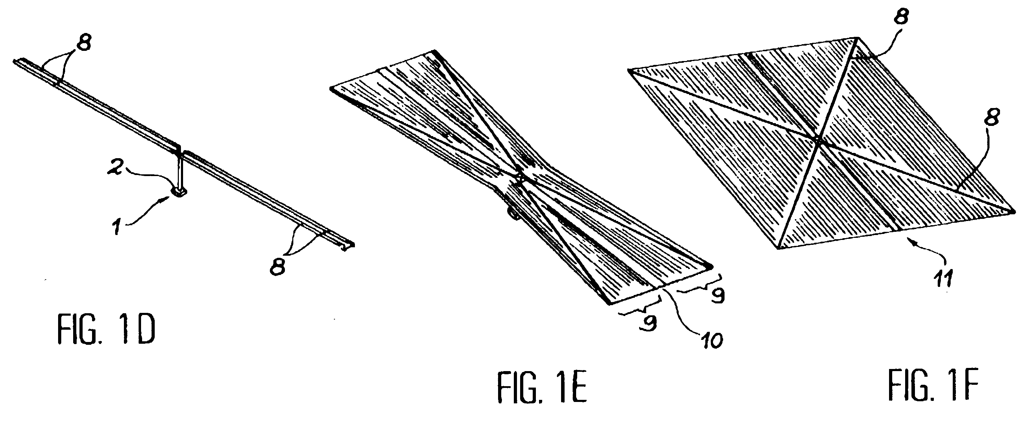

Quand le voilier 1 est dans l'espace, le déploiement de la voile commence (figure 1B) par l'extension de la tige de vérin 3 qui soulève les rouleaux 6 et les libère de cavaliers 7 sous lesquels leurs extrémités étaient glissées et qui les maintenaient aplatis. De l'air est ensuite insufflé dans les embouchures 5. Comme le montre la figure 1C, les rouleaux 6 sont déroulés suivant un plan au fur et à mesure que les mâts 8 se gonflent et se redressent. La figure 1D représente l'état où les rouleaux 6 ont disparu mais où les mâts 8 ne sont pas entièrement gonflés ; la suite du déploiement est illustrée sur la figure 1E et consiste en un dépliage progressif des empilements de plis 9 qui formaient les bords des rouleaux 6 de part et d'autre d'une partie centrale 10. Les mâts 8 se déploient alors en pivotant.

La figure 1F représente l'état final de la voile : les mâts 8 sont disposés aux diagonales du carré et la voile 11 est déployée suivant un plan ; les plis ont disparu.

Des incertitudes subsistent au sujet du dépliage de la voile 11 et du déploiement des mâts 8 dans les conditions réelles.

Le risque d'avaries ne peut être écarté. On peut aussi craindre que le gonflage ne soit pas une technique sûre pour maintenir les mâts 8 déployés. Il est prévu d'ajouter au gaz de gonflage un durcissant gazeux qui doit les raidir ensuite, mais cela complique le système. Enfin, aucun moyen n'est suggéré pour modifier le déploiement de la voile et infléchir ainsi le trajet du voilier : il est usuel d'ajouter des voiles supplémentaires de gouverne, normalement placées au bout des mâts pour dépasser de la voile 11 principale et dont les orientations ou les déploiements peuvent être commandés séparément pour déplacer le centre de poussée de la voilure ; on ne voit cependant pas comment cela serait possible ici, puisque les extrémités des mâts 8 sont au départ au milieu des rouleaux 6 et que des mâts gonflables ne semblent guère aptes à porter des charges. Il faudrait donc employer des tuyères ou des moyens analogues pour gouverner le voilier, ce qui ferait perdre une partie de l'intérêt de la propulsion à voile et ne sera pas forcément admis dans une compétition sportive.

Le brevet US-A-3 690 080 décrit un dispositif de panneaux solaires rigides coulissant sur des tringles déployables. Les panneaux sont articulés entre eux, ce qui n'est concevable que pour des éléments rigides et peu nombreux, faute de quoi des coincements ou des frottements excessifs semblent inévitables. De plus, tous les panneaux se déploient en même temps, ce qui est plus difficile à accomplir correctement, et plus risqué pour des éléments fragiles, qu'un déploiement successif des panneaux.

Le brevet US-A-3 558 219 décrit des réflecteurs souples de rayonnement tendus sur des segments d'un mât pliant, ce qui impose de diviser les réflecteurs en bandes parallèles. Les bandes sont repliées sur elles-mêmes avec un double enroulement qui imposerait, sur une voile solaire dont la face exposée au Soleil est recouverte d'un revêtement réfléchissant et en conséquence généralement conducteur (à base d'aluminium pour des bandes de Mylar par exemple) de faire se toucher des portions de ce revêtement, avec des risques de claquages, de déchirures ou d'autres dommages que des charges électrostatiques pourraient susciter.

Des améliorations sont proposées à ces dispositifs de voilure, et aussi à d'autres, grâce à l'invention définie dans la revendication indépendante.

L'avantage de cette réalisation est d'éviter de plier d'aucune manière la voile tout en assurant l'extraction échelonnée des bandes de l'endroit où elles sont emmagasinées en rouleaux, c'est-à-dire une bonne maîtrise du processus de déploiement.

Si les bandes sont enroulées autour d'axes tournants reliés aux anneaux par des cordes ou des pivots, elles ne subissent qu'un enroulement simple qui supprime les dangers évoqués plus haut des charges électrostatiques, car la face recouverte du revêtement réfléchissant ne touche que le polymère de l'autre face. Un mode de liaison avantageux consiste en des pivots ayant un axe de pivotement orienté dans la direction de déploiement des bandes, car le déploiement de la voile est alors très sûr.

Il est avantageux que les emplantures soient constituées de manière à tourner entre une position où les mâts sont sensiblement parallèles et contigus et une position de déploiement de la voile où les mâts sont sensiblement rayonnants et la voile appartient sensiblement à un plan.

Cette disposition permet de séparer l'étape de déploiement des bras de l'étape de déroulement des bandes. La voile prend une forme de pyramide de plus en plus aplatie en se déployant ; elle s'ouvre en fait comme les pétales d'une fleur. Pour peu qu'elle soit réversible, cette disposition permet de modifier à volonté le déploiement de la voile et la forme de sa surface projetée vers le Soleil, c'est-à-dire de participer à l'orientation du voilier.

Une voile de gouverne fixée à un support mobile peut être ajoutée de façon qu'elle puisse prendre des inclinaisons différentes sur le plan de voile. Le support mobile consiste avantageusement en l'un des mâts, qui est alors constitué de façon à pouvoir pivoter dans son emplanture. Cette voile de gouverne a pour but de régler la vitesse de rotation autour de l'axe perpendiculaire au plan principal de la voile.

L'invention va maintenant être décrite à l'aide des figures suivantes annexées à titre illustratif et non limitatif qui représentent une réalisation de l'invention :
- les figures 1A à 1F déjà décrites représentent le déploiement d'une voile déjà connue,
- la figure 2 représente la physionomie de la voilure conforme à l'invention quand la voile est déployée,
- la figure 3 représente la répartition de la voilure à l'état replié sur une plate-forme de rangement,
- la figure 4 représente le dispositif de déploiement des mâts,
- la figure 5 représente le mode d'accrochage des bandes de voile au mât,
- la figure 6 illustre le déploiement de la voile,
- la figure 7 illustre une étape ultérieure du déploiement,
- la figure 8 illustre les moyens d'agir sur la voile de gouverne,
- les figures 9a, 9b et 9c représentent des implantations de mâts et du reste de la voilure à l'état replié dans trois variantes d'une autre réalisation de l'invention,
- la figure 10 représente les éléments de la voilure en position repliée,
- la figure 11 représente la voilure déployée, et
- les figures 12 et 13 représentent une voile de gouverne avant et après sont déploiement.

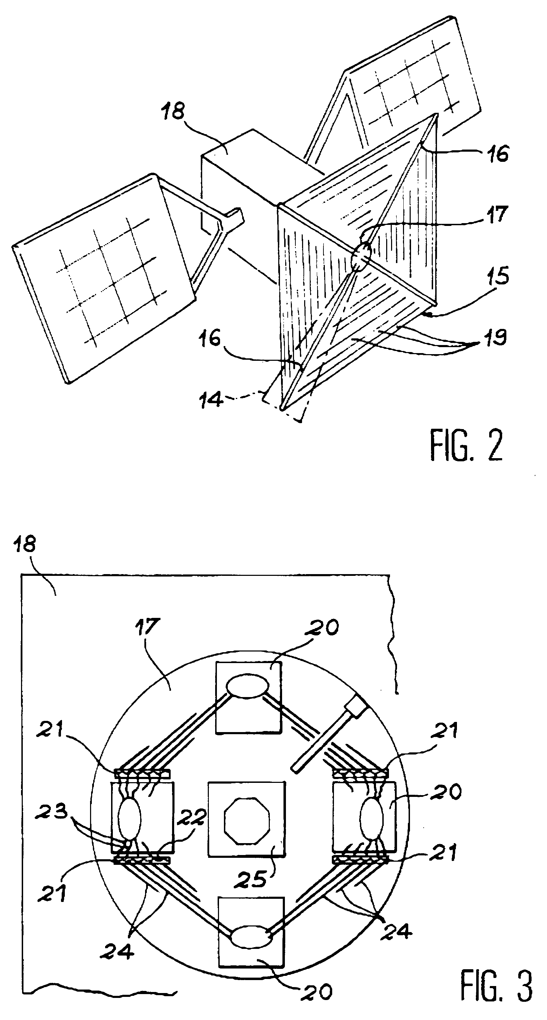

Examinons d'abord la figure 2. La voile 15 conforme à l'invention est plane et carrée à l'état déployé. Elle est tendue entre quatre mâts 16 situés aux diagonales du carré et qui concourent vers des emplacements d'emplanture presque confondus et situés sur une plate-forme 17 d'un voilier 18. La voile 15 est partagée par les mâts 16 en quatre portions et formée de bandes 19 contiguës et parallèles au côté attenant du carré. Une voile de gouverne 14 est tendue le long d'un mât 16. Elle a une forme triangulaire et s'élargit vers l'extérieur comme on l'a représenté ici, ou vers l'intérieur. Le mât 16 qui la porte est situé sur une médiane du triangle. La voile de gouverne 14 tourne autour du mât 16 selon une course de débattement angulaire qui peut être de quelques dizaines de degrés.

La figure 2 ne respecte pas les proportions réelles pour des raisons de clarté. La voile 15 a en réalité une envergure qui peut être de dix ou vingt fois les dimensions du corps du voilier 18, comme pour le voilier des figures 1.

La plate-forme 17, approximativement circulaire, reçoit quatre emplantures 20 régulièrement réparties sur sa circonférence. Les emplantures 20 sont les dispositifs dans lesquels les mâts 16 sont encastrés. Deux d'entre elles, diamétralement opposées, sont encadrées par quatre casiers 21 dans chacun desquels les bandes 19 d'une partie de voile respective sont rangées avant le déploiement à l'état enroulé. Les rouleaux sont repérés par la référence 22. Des cordes 23 s'étendent des rouleaux 22 à l'emplanture 20 la plus voisine et d'autres cordes 24 de plus grande longueur s'étendent des mêmes rouleaux 22 à une emplanture 20 un peu plus éloignée mais voisine de la précédente. Les cordes 23 et 24 semblent disparaître dans les emplantures 20. Elles aboutissent en réalité aux mâts 16 selon un agencement qui sera décrit plus loin.

Un boîtier d'électronique 25 qui peut comprendre des capteurs d'étoiles, des antennes ou d'autres engins est avantageusement placé au centre de la plate-forme 17, mais il n'a pas forcément de rapport avec l'invention.

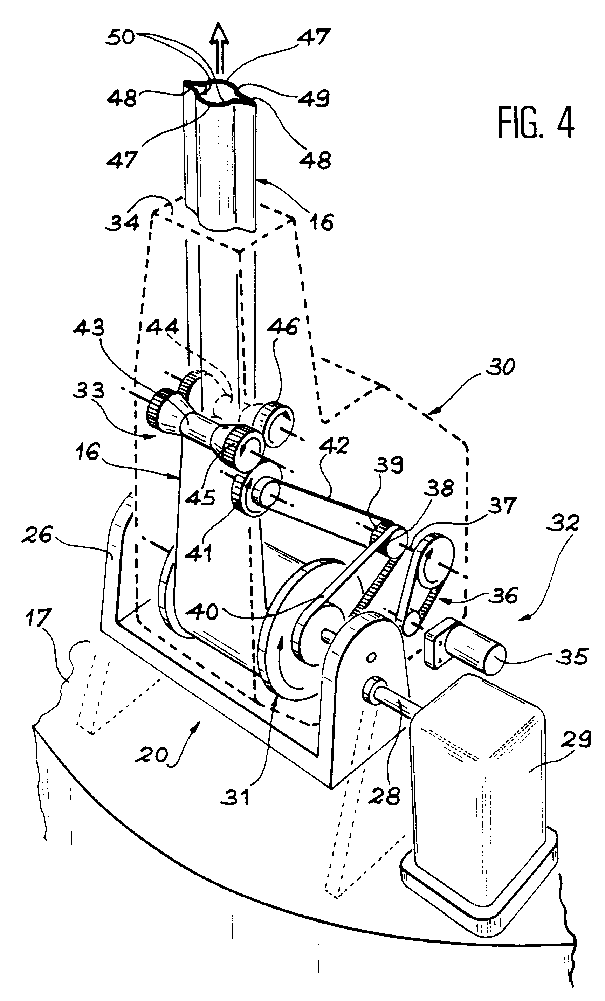

On se reporte maintenant à la figure 4 pour découvrir en quoi consistent les emplantures 20. On distingue d'abord un support basculant 26 susceptible de tourner autour d'un axe 28 commandé par un moteur pas à pas 29 qui peut être alimenté à partir de générateurs d'énergie solaire. L'axe 28 s'étend parallèlement à la plate-forme 17 et dans une direction circonférentielle et le support basculant 26 porte essentiellement un treuil 30 composé d'un tambour 31 sur lequel un mât 16 est enroulé à l'état replié, d'un système de déploiement 32, d'un laminoir 33 et d'une filière 34.

Le système de déploiement 32 comporte d'abord un moteur 35, un réducteur 36 à la sortie du moteur 35, et un arbre moteur 37 à la sortie du réducteur 36 et qui est susceptible d'entraîner l'une ou l'autre de deux poulies 38 et 39. Les poulies 38 et 39 sont montées sur l'arbre moteur 37 par des embrayages unidirectionnels non représentés de sorte qu'elles sont folles quand l'arbre moteur 37 tourne dans une direction (d'ailleurs opposée pour les deux poulies 38 et 39), et sont entraînées quand l'arbre moteur 37 tourne dans l'autre direction. C'est pourquoi le moteur 35 est réversible ou la transmission 36 comporte un dispositif d'inversion de marche. Une des poulies 38 fait tourner le tambour 31 par une première courroie 40 et l'autre poulie 39 fait tourner un pignon 41 par une seconde courroie 42.

Le laminoir 33 consiste en deux galets presseurs 43 et 44 parallèles, proches l'un de l'autre et munis d'extrémités dentées 45 et 46 formant un engrenage. Le pignon 41 forme un autre engrenage avec une des extrémités dentées 45.

Le mât 16 est formé d'un profilé élastique dont la section à une forme proche d'un tube. On y discerne deux parties en arc de cercle 47 situées sur un cercle commun, deux nervures latérales 48 situées sur un plan diamétral du cercle en question et qui s'étendent vers l'extérieur et quatre parties de raccordement 49 entre les portions en arc de cercle 47 et les nervures 48, qui ménagent une variation continue de courbure et d'orientation de la section du profilé entre ces portions et comprennent notamment des points d'inflexion 50.

Les mâts 16 et les dispositifs de treuil 30 conformes à cette description sont fabriqués par la société espagnole Sener pour diverses applications dans les véhicules spatiaux ; les brevets WO-A-91 08 949 et l'article "Solar Sail Engineering Development Mission" de l'AIAA Student Journal au numéro d'été de 1981, décrivent d'autres emplois de mâts semblables. Les mâts 16 peuvent être en cupro-béryllium ou en fibres de carbone et leur section est conçue de façon qu'ils puissent s'aplatir dans le plans des nervures 48 jusqu'à ce que les portions en arc de cercle 47 se touchent. La déformation est élastique de sorte que les mâts 16 reprennent leur section libre dès qu'ils le peuvent. L'élasticité n'est pas parfaite si des fibres de carbone sont employées car des fluages se produisent, mais un rétablissement satisfaisant est tout de même obtenu.

Le mât 16 est tout d'abord aplati et enroulé autour du tambour 31. Seule son extrémité libre dépasse du treuil 30. La section du mât 16 se redresse au-delà du laminoir 33 qui est responsable de l'aplatissement. La filière 34 située au bout du treuil 30 est suffisamment éloignée du laminoir 33 pour que la portion du mât 16 qui y passe soit à la section totalement redressée. Le but de la filière 34 est en fait de soutenir le mât 16 et de le guider quand son déploiement est décidé.

Le moteur 35 est alors mis en marche de manière que la poulie 39 qui entraîne le laminoir 33 soit entraînée. Le mât 16 enroulé sur le tambour 31 est tiré vers l'extérieur par le laminoir 33. La partie déployée se raidit à mesure que la section se redresse. Le déploiement des mâts 16 est poursuivi jusqu'à ce que la voilure soit entièrement déployée. Dans l'application qui nous intéresse ici, le déploiement de la voilure est normalement irréversible. Cependant, le treuil 30 est conçu aussi pour d'autres applications où il convient de replier le mât 16. C'est pourquoi il comprend la poulie 38, dont la commande provoque le réenroulement du mât 16 sur le tambour 31 après qu'il a été aplati en passant par le laminoir 33. Ce double système de commande à partir du tambour 31 ou du laminoir 33 est utile pour que la partie du mât 16 déroulée mais encore aplatie entre ces deux pièces ne soit jamais comprimée, ce qui la ferait flamber.

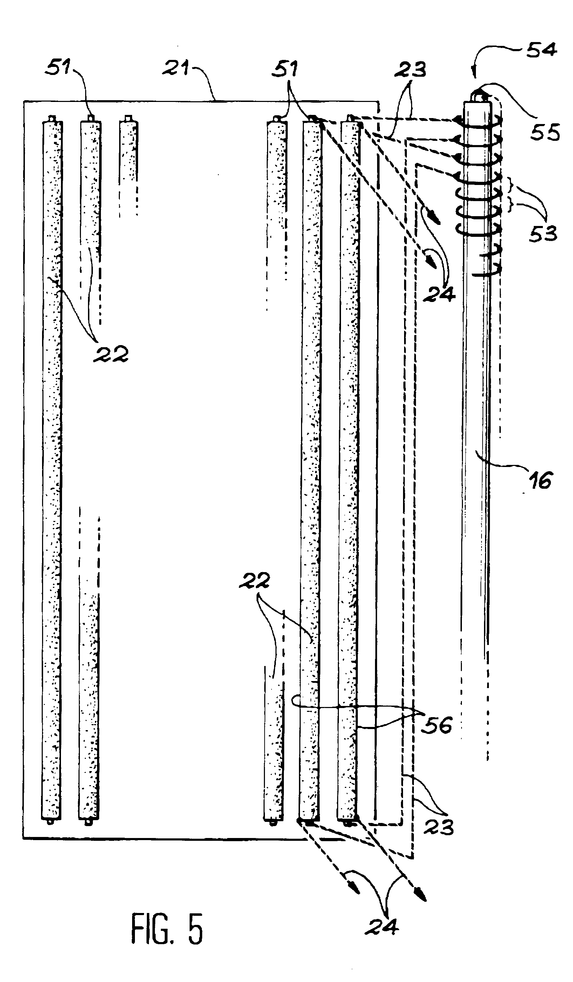

On se reporte maintenant à la figure 5. Les rouleaux 22 sont logés côte à côte dans les casiers 21 ; le matériau des bandes est enroulé autour d'un axe 51 dont les extrémités sont reliées par deux cordes 23, et par deux anneaux 52 auxquels les cordes 23 sont respectivement liées, à un mât 16. Les anneaux 52 sont enfilés sur le mât 16 et coulissent le long de lui ; leur écartement ne peut dépasser la longueur d'entretoises 53 qui sont constituées par des portions d'une corde unique 54 nouée à chaque anneau 52 et nouée également à l'extrémité libre 55 du mât 16.

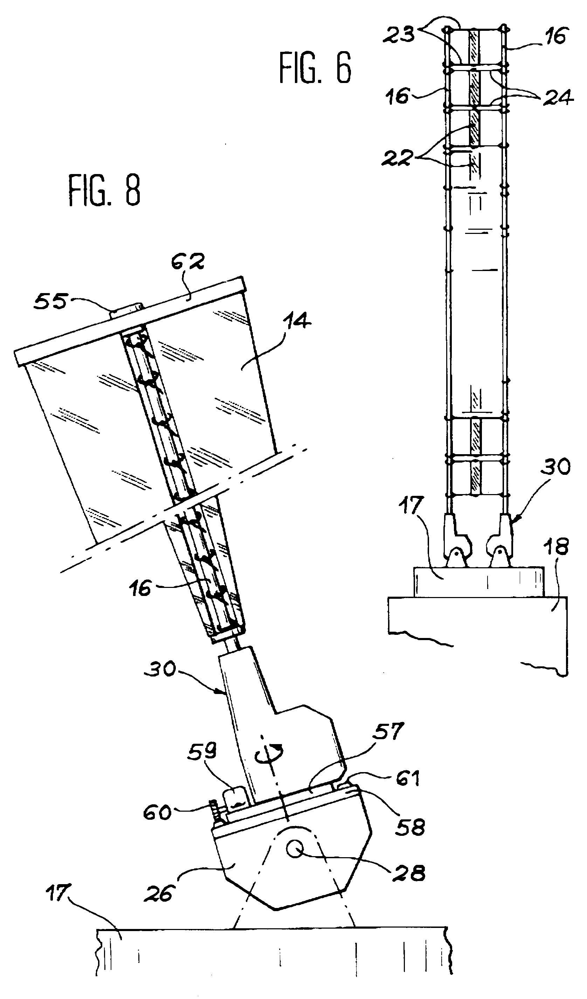

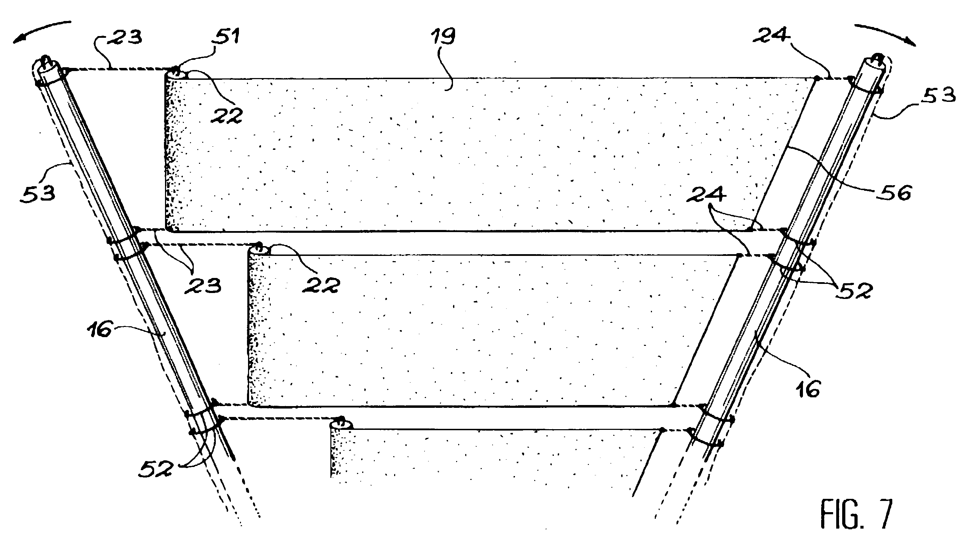

Les autres cordes 24 relient les extrémités du bord extérieur 56 des bandes 19 à un mât 16 voisin du précédent par un montage identique comportant notamment des anneaux 52 et des entretoises 53, ce qui est d'ailleurs représenté aux figures 6 et 7.

Les anneaux 52 sont empilés les uns sur les autres au-dessus des filières 34, autour du bout des mâts 16 quand la voilure est repliée. Dans la première étape du déploiement de la voilure, dont la figure 6 illustre le déroulement, seuls les mâts 16 sont déployés. Ils s'étendent alors parallèlement, en gerbe, les rouleaux 22 encore intacts pendant entre eux. Le déploiement des mâts 16 est accompagné de la mise en tension échelonnée des entretoises 53, ce qui extrait les rouleaux 22 un par un des casiers 21. Les risques d'incidents provenant d'un déploiement anarchique ou mal maîtrisé sont donc très réduits, et les cordes 23 et 24 ne risquent guère de s'emmêler. Les rouleaux 22 sont disposés côte à côte à des emplacements déterminés, leurs axes 51 se prolongeant sensiblement. Les cordes 23 et 24 sont toutes parallèles entre elles.

On fait ensuite basculer les supports basculants 26, ce qui provoque l'écartement progressif des mâts 16 et le déroulement des bandes 19. Cette étape est représentée à la figure 7. Les bandes 19 sont quelque peu distantes de sorte qu'un incident qui se produirait sur l'une d'elles n'aurait pas d'influence sur les voisines. Quand le déploiement est achevé, les mâts 16 appartiennent à un plan de voile commun et on arrive à la configuration de la figure 2.

L'ouverture de la voile 15 ou l'envergure de sa projection sur un plan peut être réglée à tout moment en faisant basculer à nouveau chacun des supports basculants 26. Comme les moteurs 29 sont indépendants, le centre de poussée de la voilure peut être déplacé afin d'infléchir la direction du trajet du voilier 18 dans la direction souhaitée. Aucune déformation notable n'est exercée sur les bandes 19.

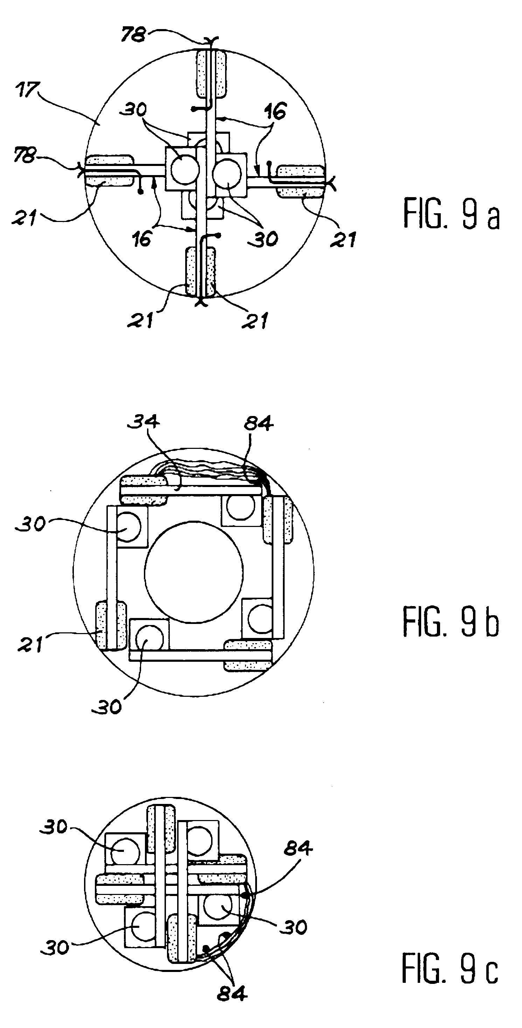

La voile de gouverne 14 peut être utilement ajoutée au dispositif si on utilise un montage tel que celui de la figure 8, dans lequel le treuil 30 du mât 16 qui porte la voile de gouverne 14 est monté sur un disque mobile 57 qui tourne autour d'un disque fixe 58 lié au support basculant 26. Le disque mobile 57 porte un moteur 59 dont l'arbre est terminé par un pignon 60 qui engrène dans une crémaillère circulaire 61 au bord du disque fixe 58. Ce dispositif permet au mât 16 de pivoter autour de son axe en glissant dans les anneaux 52 pour que l'inclinaison de la voile de gouverne 14 par rapport à la voile 15 principale soit modifiée. L'extrémité libre 55 du mât 16 concerné porte alors une traverse tournante 62 autour de laquelle la voile de gouverne 14 est enroulée avant le déploiement de la voilure.

D'autres moyens de réglage de la vitesse de tournoiement de la voilure sont évidemment concevables. Les mâts 16 ne sont pas forcément au nombre de quatre et la voile peut être un polygone différent d'un carré. Le matériau de la voile est indifférent et peut être choisi parmi tous ceux qui sont usuels pour cet emploi.

Une autre réalisation de l'invention est décrite sur les dernières figures et présente comme avantage fondamental une grande réduction des risques de mauvais déploiement, par rapport à la réalisation précédente où les cordes 23 peuvent s'emmêler.

On illustre également une situation où les mâts 16, par ailleurs identiques à ceux de la réalisation précédente, ne pivotent pas nécessairement dans leurs emplantures. Comme on le représente sur les figures 9a, 9b et 9c, ils présentent à l'état replié des tronçons sortis des treuils 30 qui peuvent être disposés en étoile, en polygone ou en se chevauchant et s'étendent tous sensiblement dans un même plan et dans leur direction finale de déploiement. Deux casiers 21 s'étendent au bord de la plate-forme 17, de part et d'autre de chaque mât 16. On choisira la disposition la plus commode pour placer d'autres appareils éventuels sur la plate-forme 17.

Dans les casiers 21 sont rangés alternativement des coques 80 et des barres 81. Les coques 80 contiennent les bandes 19, enroulées comme précédemment autour d'axes 79 et dont l'extrémité sort des coques 80 par une fente 82. L'autre extrémité des bandes 19 est attachée à une barre 81 posée dans un casier 21 associé à un mât 16 voisin. Les bandes 19 sont donc partiellement sorties et tendues avant même le déploiement des mâts 16 et passent par des jours 83 des casiers 21 ; elles doivent contourner les treuils 30 dans les réalisations des figures 9b et 9c et sont pour cela tendues sur des pieux de contournement 84. Les axes 79 tournent librement dans les coques 80 mais un verrou peut les bloquer avant le déploiement. Ce verrou peut consister en un moyen de liaison qui se brise ou se disjoint dès qu'une tension suffisante est imposée à la bande 19. Les axes 79 et les barres 81 maintiennent les bandes 19 droites et les empêchent de se plier. Les extrémités toujours sorties des bandes 19 ont une épaisseur renforcée.

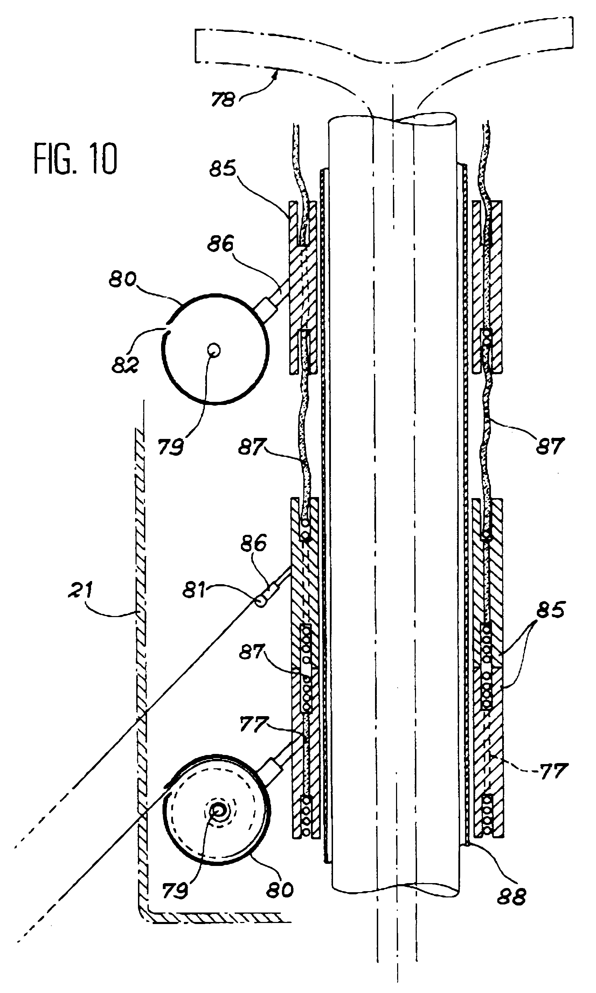

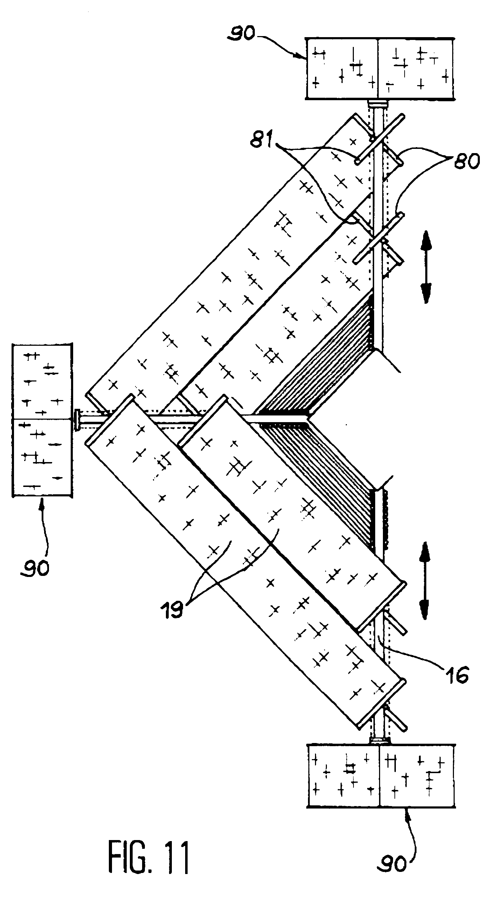

Coques 80 et barres 81 sont reliées à des anneaux 85, qui coulissent comme les anneaux 52 le long des mâts 16 mais sont en outre munis de pivots 86 qui les relient aux coques 80 et aux barres 81. Les pivots 86 s'étendent dans le plan de déploiement des bandes 19 de sorte que les coques 80 et les barres 81 peuvent pivoter entre la position de la figure 10, où ils sont tous parallèles entre eux, contigus et perpendiculaires aux mâts 16, et la position de la figure 11 où ils sont obliques par rapport aux mâts 16, quand les bandes 19 sont pleinement déployées. Le mouvement de pivotement est provoqué par des glissières 78 en forme de barres courbes situées à proximité de la sortie des casiers 21 et qui font basculer les coques 80 et les barres 81.

On retrouve des cordes 53 qui relient les anneaux 85 entre eux. Il est avantageux qu'elles soient logées dans des rainures 87 circulaires creusées aux bords des anneaux 85, qui peuvent ainsi être parfaitement jointifs et empilés avant le déploiement sans que les cordes 53 aient de possibilité de s'échapper. Une gaine 88 lubrifiée peut être interposée entre les mâts 16, à l'endroit des casiers 21, et les anneaux 85 pour permettre à ceux-ci de coulisser facilement au début du déploiement.

Les cordes 53 peuvent être remplacées par des câbles électriques destinés à alimenter un appareil au bout du mât 16, tel que le moteur 94 dont il va être question. De tels câbles sont composés de longueurs reliant les anneaux 85, comme les cordes 53, et de longueurs (77 sur la figure 10) insérées dans des perçages des anneaux 85 et qui relient les précédentes. Les moyens de retenue des cordes 53 ou des câbles sont des noeuds, des agrafes ou tout autre moyen usuel.

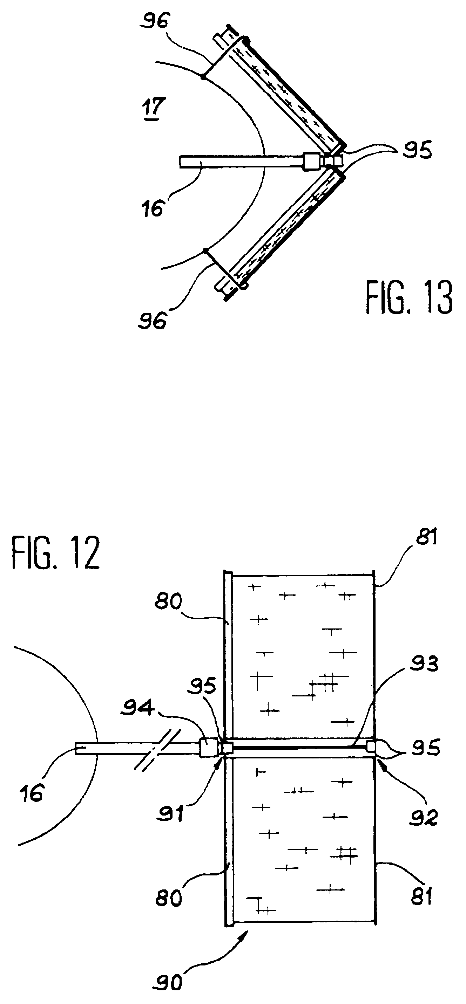

La figure 12 représente une voile de gouverne 90 qui est comme la voile principale formée de bandes 19 tendues entre des coques 80 et des barres 81. Les coques 80 et les barres 81 sont articulées aux extrémités 91 et 92 d'un mât de prolongement 93 situé à l'extrémité du mât 16 proprement dit et qui peut consister en un système télescopique formé d'éléments emboîtés et relié par des ressorts qu'un système pyrotechnique peut libérer. Un mât pliant et enroulé autour d'un treuil comme le mât 16 est cependant préféré car il peut être replié, ce qui offre la faculté de faire varier la surface de la voile de gouverne 90 et donc d'équilibrer la poussée sur la voilure. Le mât de prolongement 93 pivote à l'extrémité du mât 16 par un moteur 94. On voit en comparant la figure 12 à la figure 13 que les coques 80 et les barres 81 sont reliées aux extrémités 91 et 92 par des ressorts à lame 95 qui constituent des charnières et permettent de replier partiellement les coques 80 et les barres 81 contre le tronçon libre de fin du mât 16 afin de réduire l'envergure de la voile de gouverne 90 au repos. Des crochets 96 fixés à la plate-forme 17 assurent cette fonction. Dès que le mât 16 commence à être déployé, les coques 80 et les barres 81 glissent hors des crochets 96, les ressorts à lame 95 se détendent et les coques 80 et les barres 81 viennent en prolongement perpendiculairement aux mâts 16 et 93, à la façon des vergues d'un mât de navire. Le déploiement de la voile de gouverne 90 devient alors possible.

## Revendications

1. Voilure solaire composée d'une voile (15), de mâts sensiblement concourants (16), d'emplantures (20) reliant les mâts (16) à un voilier spatial (18) et de dispositifs de déploiement (30) des mâts, situés aux emplantures (20) et comprenant des treuils (30), les mâts (16) étant des profilés élastiques pouvant être aplatis et enroulés autour des treuils (30) et pouvant être déployés à partir d'un état où ils sont repliés et emmagasinés sur le voilier par des dispositifs de déploiement (30) situés aux emplantures (20), caractérisée en ce que la voile est composée de bandes (19) séparées et tendues entre deux mâts voisins en se succédant en séries le long des mâts, les bandes étant enroulées quand les mâts sont repliés et reliées aux mâts par des attaches coulissant sur les mâts qui consistent en des anneaux (52) enfilés sur les mâts et reliés entre eux par des cordes (53).

2. Voilure solaire suivant la revendication 1, caractérisée en ce que les emplantures sont constituées de manière à tourner entre une position où les mâts (16) sont sensiblement parallèles et contigus et une position de déploiement de la voile où les mâts sont sensiblement rayonnants et la voile appartient sensiblement à un plan.

3. Voilure solaire suivant l'une quelconque des revendications 1 ou 2, caractérisée en ce que les anneaux (52) sont reliés aux bandes (19) par d'autres cordes (23).

4. Voilure solaire suivant l'une quelconque des revendications 1 à 3, caractérisée en ce que les bandes (19) sont enroulées autour d'axes (51) reliés aux anneaux (52) par des éléments souples (23).

5. Voilure solaire suivant l'une quelconque des revendications 1 à 4, caractérisée en ce que les bandes sont enroulées autour d'axes (79, 81) reliés aux anneaux par des pivots (86) ayant un axe de pivotement orienté dans une direction de déploiement des bandes.

6. Voilure solaire suivant la revendication 5, caractérisée en ce que les pivots sont reliés à des coques (80) de protection des bandes enroulées, les axes (79) tournant dans les coques, et en ce que le voilier porte des guidages (78) faisant pivoter les coques.

7. Voilure solaire suivant l'une quelconque des revendications 1 à 6, caractérisé en ce que les cordes (53) reliant les anneaux sont logées dans des creux (87) des anneaux (85) avant que la voile ne soit déployée.

8. Voilure solaire suivant l'une quelconque des revendications 1 à 7, caractérisé en ce qu'elle comprend une gaine (88) intercalée entre les mâts et les anneaux avant que la voile ne soit déployée.

9. Voilure solaire suivant l'une quelconque des revendications 1 à 8, caractérisée en ce qu'elle comprend une voile de gouverne composée de bandes tendues entre des vergues d'un support déployable (93) et enroulées avant que le support ne soit déployé.

10. Voilure solaire suivant la revendication 9, caractérisé en ce que les vergues sont tournantes dans un plan du support et comprennent un ressort (95) qui les rend perpendiculaires au support dès qu'un des mâts (16), porteur de la voile de gouverne (90), est déployé.

## Claims

1. Solar sails consisting of a sail (15), substantially concurrent masts (16), mast steps (20) connecting the masts (16) to a space sailing ship (18) and devices (30) for deploying the masts, situated on the mast steps (20) and comprising winches (30), the masts (16) being elastic profiled members which can be flattened and coiled around the winches (30) and can be deployed from a state in which they are folded and stored on the sailing ship by deployment devices (30) situated on the mast steps (20), characterised in that the sail is composed of separate strips (19) tensioned between two adjacent masts and following each other in series along the masts, the strips being coiled when the masts are folded and connected to the masts by fixings sliding on the masts which consist of rings (52) slipped onto the masts and connected to each other by cords (53).

2. Solar sails according to Claim 1, characterised in that the mast steps are formed so as to rotate between a position in which the masts (16) are substantially parallel and contiguous and a position in which the sail is deployed, in which the masts are substantially radiating and the sail lies substantially in one plane.

3. Solar sails according to either one of Claims 1 or 2, characterised in that the rings (52) are connected to the strips (19) by other cords (23).

4. Solar sails according to any one of Claims 1 to 3, characterised in that the strips (19) are coiled around shafts (51) connected to the rings (52) by flexible members (23).

5. Solar sails according to any one of Claims 1 to 4, characterised in that the strips are coiled around shafts (79, 81) connected to the rings by pivots (86) having a pivot axis oriented in a direction in which the strips are deployed.

6. Solar sails according to Claim 5, characterised in that the pivots are connected to shells (80) protecting the coiled strips, the shafts (79) rotating in the shells, and in that the sailing ship bears guides (78) causing the shells to pivot.

7. Solar sails according to any one of Claims 1 to 6, characterised in that the cords (53) connecting the rings are housed in recesses (87) in the rings (85) before the sail is deployed.

8. Solar sails according to any one of Claims 1 to 7, characterised in that it comprises a sheath (88) interposed between the masts and rings before the sail is deployed.

9. Solar sails according to any one of Claims 1 to 8, characterized in that they comprise a steering sail composed of strips tensioned between yards on a deployable support (93) and coiled before the support is deployed.

10. Solar sails according to Claim 9, characterized in that the yards are able to swing in a plane of the support and comprise a spring (95) which renders them perpendicular to the support as soon as one of the masts (16), carrying the steering sail (90), is deployed.

## Patentansprüche

1. Sonnensegelvorrichtung, bestehend aus einem Flügel (15), aus im wesentlichen aufeinander zulaufenden Streben (16), aus Strebenansätzen (20), die die Streben (16) mit einem Sonnensegelträger (18) verbinden, sowie aus den Entfaltungsvorrichtungen (30) für die Streben, die in den Strebenansätzen (20) sitzen und Windeelemente (30) umfassen, wobei die Streben (16) elastische Profilbauteile sind, die abgeflacht und um die Windeelemente (30) gewickelt werden können und die aus einem zusammengefalteten Zustand heraus mit Hilfe von Entfaltungsvorrichtungen (30), die in den Strebenansätzen sitzen, entfaltet und auf dem Sonnensegelträger aufgespannt werden können, dadurch gekennzeichnet, daß das Segel aus getrennten und zwischen zwei benachbarten Streben aufgespannten Bahnen (19) besteht, die sich in Reihen entlang der Streben aneinanderfügen, wobei diese Bahnen zusammengerollt sind, wenn die Streben zusammengefaltet sind, und wobei die Bahnen mittels gleitender Befestigungen mit den Streben verbunden sind, die aus zwei Ringen (52) bestehen, die auf die Streben aufgeschoben werden und untereinander durch Sehnen (53) verbunden sind.

2. Sonnensegelvorrichtung gemäß Anspruch 2, dadurch gekennzeichnet, daß die Strebenansätze so beschaffen sind, daß sie sich zwischen einer Position, in der die Streben (16) im wesentlichen parallel zueinander liegen und einander berühren, und einer entfalteten Segelposition, in der die Streben strahlenförmig auseinanderlaufen und das Segel eine annähernd ebene Form einnimmt, drehen können.

3. Sonnensegelvorrichtung gemäß eines der Ansprüche 1 oder 2, dadurch gekennzeichnet, daß die Ringe (52) durch weitere Sehnen (23) mit den Bahnen (19) verbunden sind.

4. Sonnensegelvorrichtung gemäß eines der Ansprüche 1 bis 3, dadurch gekennzeichnet, daß die Bahnen (19) um Wellen (51) gewickelt sind, die über elastische Elemente (23) mit den Ringen (52) verbunden sind.

5. Sonnensegelvorrichtung gemäß eines der Ansprüche 1 bis 4, dadurch gekennzeichnet, daß die Bahnen um Wellen (79, 81) gewickelt sind, die mit den Ringen über Gelenkzapfen (86) verbunden sind, die eine Schwenkachse aufweisen, die einer Entfaltungsrichtung der Bahnen entspricht.

6. Sonnensegelvorrichtung gemäß Anspruch 5, dadurch gekennzeichnet, daß die Schwenkzapfen mit Schutzhülsen (80) für die aufgewickelten Bahnen verbunden sind, wobei sich die Wellen (79) in diesen Schutzhülsen drehen und wobei der Sonnensegelträger mit Führungen (78) ausgestattet ist, durch die die Schutzhülsen geschwenkt werden können.

7. Sonnensegelvorrichtung gemäß eines der Ansprüche 1 bis 6, dadurch gekennzeichnet, daß die Sehnen (53), die die Ringe miteinander verbinden, in den Hohlräumen (87) der Ringe (85) untergebracht sind, wenn das Segel nicht entfaltet ist.

8. Sonnensegelvorrichtung gemäß eines der Ansprüche 1 bis 7, dadurch gekennzeichnet, daß sie eine Ummantelung (88) umfaßt, die zwischen die Streben und Ringe eingefügt ist, wenn das Segel nicht entfaltet ist.

9. Sonnensegelvorrichtung gemäß eines der Ansprüche 1 bis 8, dadurch gekennzeichnet, daß sie einen Steuerflügel umfaßt, der aus Bahnen besteht, die zwischen den Streben einer entfaltbaren Halterung (93) aufgespannt sind und zusammengerollt sind, wenn die Halterung nicht entfaltet ist.

10. Sonnensegelvorrichtung gemäß Anspruch 9, dadurch gekennzeichnet, daß die Streben in einer Ebene der Halterung drehbar sind und eine Feder (95) umfassen, die sie eine rechtwinklige Position gegenüber der Halterung einnehmen lassen, sobald eine der Streben (16), die das Steuersegel (90) tragen, entfaltet wird.
